# FASCICULE DE BREVET EUROPEEN

(11) **EP 1 352 180 B1**
(45) Date de publication et mention de la délivrance du brevet: **11.10.2006**
(21) Numéro de dépôt: 01995743.0
(22) Date de dépôt: 19.12.2001
(51) Int. Cl.: F16D 65/18

(54) **FREIN DE PARC ET SON DISPOSITIF DE COMMANDE.**
FESTSTELLBREMSE UND STEURUNGSEINRICHTUNG DAFÜR
PARKING BRAKE AND CONTROL DEVICE THEREFOR

(30) Priorité: 02.01.2001 FR 0100056
(43) Date de publication de la demande: 15.10.2003
(73) Titulaire: ROBERT BOSCH GMBH, 70442 Stuttgart (DE)
(72) Inventeur: BOISSEAU, Jean-Pierre, F-75014 Paris (FR); VERDURE, Laurent, F-92800 Puteaux (FR)
(74) Mandataire: Hurwic, Aleksander Wiktor
(86) Numéro de dépôt international: PCT/FR2001/004065
(87) Numéro de publication internationale: WO 2002/053932

(56) Documents cités:
- FR-A- 2 772 705
- GB-A- 1 303 133
- US-A- 3 820 635
- US-A- 3 964 806

## Description

L'invention est relative à un dispositif de frein de parking ou frein à mains pour véhicule.

Elle concerne plus particulièrement un dispositif de ce genre dans lequel, pour exercer une force de translation pour serrer un disque entre deux mâchoires de freinage, on transforme un mouvement de rotation provoqué par l'actionnement manuel du frein en ce mouvement de translation grâce à un mécanisme à rampes et à billes qui, en outre, amplifie les efforts.

Un tel mécanisme, connu en soi, voir par exemple le document US-A-3 820 635, est représenté sur les figures 1 à 3.

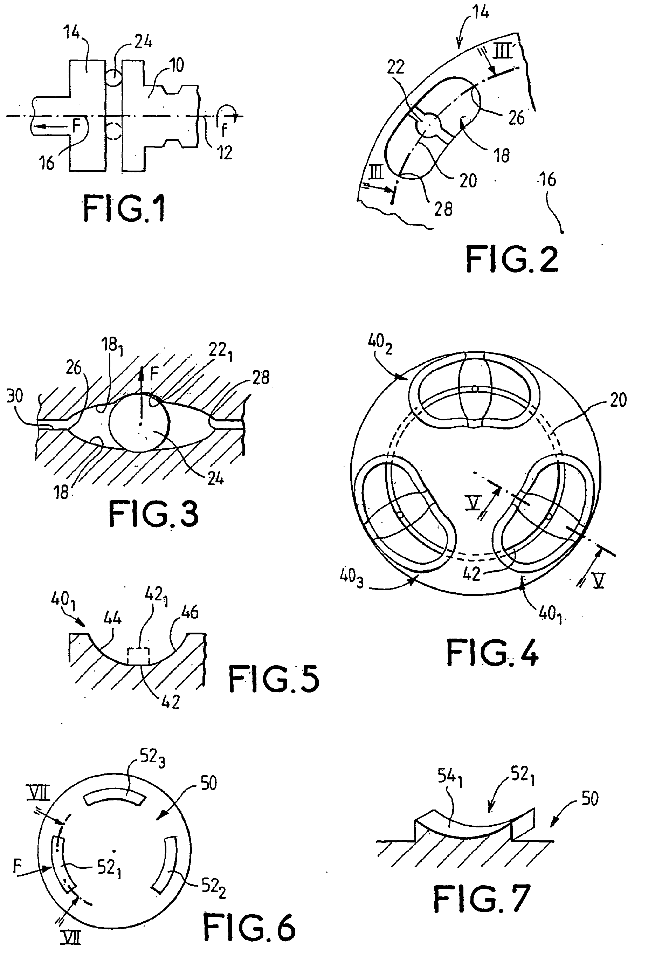

Ce dispositif de transformation de mouvement comporte (figure 1) un premier plateau 10 immobile en translation mais libre en rotation autour d'un axe 12, et un second plateau 14 immobile en rotation mais libre en translation le long d'un axe 16 colinéaire à l'axe 12.

Chacun des plateaux 10 et 14 présente des rampes, par exemple trois rampes, disposées régulièrement autour des axes 12 et 16. Ces rampes présentent la forme d'alvéoles ou d'évidements qui sont représentés sur les figures 2 et 3. La figure 2 montre une vue de face d'un plateau, par exemple le plateau 14, perpendiculairement à l'axe 16. L'évidement 18 présente un axe longitudinal moyen 20 formant un arc de cercle centré sur l'axe 16, et, sensiblement au centre de cet arc de cercle, il comporte un renfoncement 22 comme montré sur la figure 3 qui est une coupe selon l'axe III/III' de la figure 2.

Une bille 24 est emprisonnée entre l'évidement 18 du plateau 14 et l'évidement correspondant 18₁ du plateau 10. En position de repos, c'est-à-dire le frein de parc non actionné, la bille 24 s'appuie dans les renfoncements 22 et 22₁ des évidements, respectivement, 18 et 18₁.

Pour actionner le frein de parc, on prévoit une commande qui confère un mouvement de rotation au plateau 10 afin qu'il tourne autour de son axe 12. Dans ces conditions, le plateau 10 étant immobile en translation, la bille roule au fond de l'évidement 18 pour se rapprocher de l'extrémité 26 ou 28 (figure 2), c'est-à-dire de la partie plane 30 du plateau 14. Il en résulte que la bille 24 repousse le plateau 14 dans le sens de la flèche F (figures 1 et 3).

Un tel dispositif transformant l'effort de rotation en effort de translation fonctionne correctement si les billes suivent les lignes moyennes ou profils 20 de chacun des évidements ou empreintes 18. Cependant, il n' en est pas ainsi quand les axes 12 et 16 des plateaux ne sont pas alignés soit du fait du fonctionnement même du frein, soit du fait des tolérances de fabrication. On a ainsi constaté que lorsque les billes ne suivent pas la ligne 20, il se produit des coincements, ce qui conduit à exercer des efforts plus importants pour commander le frein de parc. En outre, les efforts entraînent un écrouissage du métal constituant les plateaux, c'est-à-dire une déformation de ces plateaux et donc une amplification des efforts à exercer.

L'invention remédie à ces inconvénients. Elle permet un fonctionnement correct du dispositif malgré des défauts d'alignement des axes des plateaux et/ou malgré les tolérances de fabrication.

À cet effet, dans le dispositif conforme à l'invention, pour permettre, en cas de non alignement des axes des plateaux ou de tolérances de fabrication, d'éviter d'exercer des contraintes sur la bille perturbant le fonctionnement du dispositif, on prévoit sur l'un des plateaux une bande de guidage de la bille qui s'étend selon un trajet ou profil désiré.

Dans une réalisation, la bande de guidage est au fond de chacune des empreintes prévues sur au moins un plateau. Cette bande est constituée, dans ce cas, par un fond plat ou, de façon plus générale, par une bande de rayon de courbure sensiblement plus important que le rayon de courbure de l'empreinte au voisinage de cette bande. Lorsque la bande de guidage est au fond d'une empreinte, cette bande peut être réalisée en frappant le métal constituant le plateau à l'endroit où cette bande doit être réalisée.

En variante, la bande forme une saillie au fond de chaque empreinte.

Dans une autre réalisation, la bande est formée directement en saillie sur un plateau sans empreinte.

Ainsi, quel que soit son mode d'exécution, l'invention, qui est d'une réalisation particulièrement simple, évite des coincements malgré des tolérances de fabrication importantes ou des positionnements non-coaxiaux des deux plateaux.

La largeur de la bande est choisie pour absorber le défaut maximal de concentricité entre les deux plateaux.

De façon générale, l'invention concerne un dispositif de commande de frein de parc pour véhicule, ce dispositif transformant un mouvement de rotation en un mouvement de translation et comprenant un premier plateau commandé en rotation et immobile en translation, un second plateau immobile en rotation mais libre en translation, les deux plateaux présentant l'un en face de l'autre des rampes, une bille étant emprisonnée entre deux rampes correspondantes des premier et second plateaux, la rotation du premier plateau provoquant le déplacement de la bille sur la rampe correspondante et, ainsi, le mouvement de translation du second plateau. Ce dispositif est caractérisé en ce que les rampes d'au moins un des plateaux comprennent, chacune, une bande de guidage du parcours de la bille correspondante.

Selon une réalisation, dans au moins l'un des plateaux, les rampes font partie d'empreintes d'une face du plateau et en ce que les bandes de guidage se trouvent au fond de chacune des empreintes. Dans ce cas, la bande de guidage est, par exemple, sensiblement plane ou présente un rayon de courbure sensiblement plus important que le rayon de courbure des parties avoisinantes de l'empreinte. Dans un mode d'exécution, la bande de guidage se raccorde de façon continue au reste de l'empreinte, la bande de guidage étant, par exemple, constituée par une partie de métal frappé.

La bande de guidage peut être en saillie du fond de l'empreinte.

Selon une autre réalisation, la bande de guidage constitue les sommets de rampes en saillie d'une face d'au moins l'un des plateaux.

La projection de la bande de guidage sur un plan du plateau correspondant constitue, dans une réalisation, un arc de cercle centré sur l'axe de ce plateau.

Chaque plateau comporte, par exemple, trois rampes.

L'invention concerne aussi un frein de parc qui est caractérisé en ce qu'il comprend un dispositif de commande du type défini ci-dessus.

D'autres caractéristiques et avantages de l'invention apparaîtront avec la description de certains de ses modes de réalisation, celle-ci étant effectuée en se référant aux dessins ci-annexés sur lesquels :
les figures 1 à 3, déjà décrites, représentent un dispositif de transformation de mouvement de rotation en mouvement de translation pour frein de parc connu,
la figure 4 est une vue de face d'un plateau d'un dispositif conforme à l'invention,
la figure 5 est une coupe selon la ligne V/V de la figure 5.
la figure 6 est une vue analogue à la figure 4 pour une variante, et
la figure 7 est une vue en perspective et en coupe selon la ligne 7-7 de la figure 6.

Dans l'exemple représenté sur la figure 5, le plateau 10, immobile en translation mais libre en rotation autour de l'axe 12, présente trois empreintes 40₁, 40₂, 40₃ ayant dans l'ensemble la même forme que les empreintes 18 décrites en relation avec les figures 1 à 3 mais qui s'en distinguent par le fait que le long de l'arc de cercle 20, on prévoit au fond de chacune des empreintes une bande de guidage 42 constituée par une partie aplatie du fond de l'alvéole ou une partie de rayon de courbure sensiblement plus important que le rayon de courbure des flancs 44 et 46 (figure 5) de l'alvéole de part et d'autre de cette bande 42.

Cette bande de guidage est prévue sur un seul des deux plateaux. Cependant, elle peut être prévue indifféremment sur le plateau 10, immobile en translation, ou sur le plateau 14, immobile en rotation.

Ainsi, l'invention fournit par une modification extrêmement simple de l'un des plateaux une solution au problème de défaut d'alignement entre les deux plateaux, et cela sans prévoir de pièce supplémentaire.

Dans une variante représentée en traits interrompus sur la figure 5, la bande 42₁ constitue une saillie au fond d'une empreinte.

Dans une autre variante représentée sur les figures 6 et 7, un plateau (non montré) comporte des empreintes classiques, sans bande de guidage et un autre plateau 50 comporte des bandes de guidage 52₁; 52₂, 52₃ (figure 6) en saillie d'une face du plateau et disposées en face des empreintes de l'autre plateau. La saillie 52₁ représentée sur la figure 7 se termine, à l'opposé de la face principale du plateau 50, par une bande 54₁ formant un trajet analogue à la bande 20 sur la figure 4.

L'invention s'applique principalement à l'industrie du freinage pour véhicules automobiles et notamment pour voitures particulières.

## Revendications

1. Dispositif de commande de frein de parc pour véhicule, ce dispositif transformant un mouvement de rotation en un mouvement de translation et comprenant un premier plateau (10) commandé en rotation et immobile en translation, un second plateau (14) immobile en rotation mais libre en translation, les deux plateaux présentant l'un en face de l'autre des rampes, une bille étant emprisonnée entre deux rampes correspondantes des premier et second plateaux, la rotation du premier plateau provoquant le déplacement de la bille sur la rampe correspondante et, ainsi, le mouvement de translation du second plateau, **caractérisé en ce que** les rampes d'au moins un des plateaux comprennent, chacune, une bande de guidage (42, 42₁,54₁) du parcours de la bille correspondante.

2. Dispositif selon la revendication 1 **caractérisé en ce que**, dans au moins l'un des plateaux, les rampes font partie d'empreintes d'une face du plateau et **en ce que** les bandes de guidage (42, 42₁) se trouvent au fond de chacune des empreintes.

3. Dispositif selon la revendication 2, **caractérisé en ce que** la bande de guidage est sensiblement plane ou présente un rayon de courbure sensiblement plus important que le rayon de courbure des parties avoisinantes (44, 46) de l'empreinte.

4. Dispositif selon la revendication 2 ou 3 **caractérisé en ce que** la bande de guidage (42) se raccorde de façon continue au reste de l'empreinte.

5. Dispositif selon la revendication 4, **caractérisé en ce que** la bande de guidage est constituée par une partie de métal frappé.

6. Dispositif selon la revendication 3 **caractérisé en ce que** la bande de guidage (42) est en saillie du fond de l'empreinte.

7. Dispositif selon la revendication 1 **caractérisé en ce que** la bande de guidage (54₁) constitue les sommets de rampes en saillie d'une face d'au moins l'un des plateaux.

8. Dispositif selon l'une quelconque des revendications précédentes **caractérisé en ce que** la projection de la bande de guidage sur un plan du plateau correspondant constitue un arc de cercle centré sur l'axe de ce plateau.

9. Dispositif selon l'une quelconque des revendications précédentes, **caractérisé en ce que** chaque plateau comporte trois rampes.

10. Frein de parc **caractérisé en ce qu'**il comprend un dispositif de commande selon l'une quelconque des revendications précédentes.

## Claims

1. Control device intended for a parking brake in a motor vehicle, said device converting a rotational motion into a translational motion and comprising a first plate (10) for a controlled rotational motion but incapable of a translation motion, and a second plate (14) unable to rotate but with a free translation motion, said-plates including ramps facing each other and a ball being confined between two corresponding ramps in the first and second plates, wherein the rotation of the first plate causes the ball to travel on the corresponding ramp and, therefore, the second plate to carry out a translational motion, **characterised in that** each ramp of at least one of the plates comprises a band (42, 42₁, 54₁) so as to guide the corresponding ball in its motion.

2. Device according to claim 1, **characterised in that**, in at least one of the plates, the ramps are part of impresses provided in a face of the plate and **in that** the guiding bands (42, 42₁) are situated at the bottom of each one of the impresses.

3. Device according to claim 2, **characterised in that** the guiding band is substantially plane or has a radius of curvature substantially greater than the radius of curvature of the adjacent portions (44, 46) of the impress.

4. Device according to claim 2 or 3, **characterised in that** the guiding band (42) blends smoothly into the other portions of the impress.

5. Device according to claim 4, **characterised in that** the guiding band consists of a stamped metal portion.

6. Device according to claim 3, **characterised in that** the guiding band (42) protrudes from the bottom of the impress.

7. Device according to claim 1, **characterised in that** the guiding band (54₁) forms the apices of ramps protruding from a face of at least one of the plates.

8. Device according to any one of the preceding claims, **characterised in that** the projection of the guiding band on a plane of the corresponding plate forms an arc of a circle centred on the axis of said plate.

9. Device according to any one of the preceding claims, **characterised in that** each plate includes three ramps.

10. Parking brake, **characterised in that** it comprises a control device according to any one of the preceding claims.

## Patentansprüche

1. Vorrichtung zur Steuerung einer Fahrzeughandbremse, wobei diese Vorrichtung eine Drehbewegung in eine Translationsbewegung umwandelt und eine erste Platte (10) aufweist, die in Drehung gesteuert und translatorisch blockiert ist, eine zweite Platte (14), die drehblockiert aber translatorisch frei ist, wobei die beiden Platten einander gegenüberliegende Rampen aufweisen, wobei eine Kugel zwischen zwei entsprechenden Rampen der ersten und der zweiten Platte eingeschlossen ist, wobei die Drehung der ersten Platte die Verlagerung der Kugel auf der entsprechenden Rampe und somit die Translationsbewegung der zweiten Platte bewirkt, **dadurch gekennzeichnet, dass** die Rampen mindestens einer der Platten jeweils eine Bahn (42, 42₁, 54₁) zur Führung des Wegs der entsprechenden Kugel aufweisen.

2. Vorrichtung nach Anspruch 1, **dadurch gekennzeichnet, dass** bei mindestens einer der Platten die Rampen Teil von Vertiefungen einer Fläche der Platte sind und sich die Führungsbahnen (42, 42₁) am Boden jeder der Vertiefungen befinden.

3. Vorrichtung nach Anspruch 2, **dadurch gekennzeichnet, dass** die Führungsbahn im Wesentlichen eben ist oder einen Krümmungsradius aufweist, der im Wesentlichen größer ist als der Krümmungsradius der angrenzenden Teile (44, 46) der Vertiefung.

4. Vorrichtung nach Anspruch 2 oder 3, **dadurch gekennzeichnet, dass** die Führungsbahn (42) kontinuierlich mit dem Rest der Vertiefung verbunden ist.

5. Vorrichtung nach Anspruch 4, **dadurch gekennzeichnet, dass** die Führungsbahn durch einen Abschnitt aus geprägtem Metal gebildet ist.

6. Vorrichtung nach Anspruch 3, **dadurch gekennzeichnet, dass** die Führungsbahn (42) am Boden der Vertiefung hervorsteht.

7. Vorrichtung nach Anspruch 1, **dadurch gekennzeichnet, dass** die Führungsbahn (54₁) die Rampenspitzen bildet, die von einer Fläche mindestens einer der Platten hervorstehen.

8. Vorrichtung nach einem der vorhergehenden Ansprüche, **dadurch gekennzeichnet, dass** der Überstand der Führungsbahn auf einer entsprechenden Plattenebene einen Kreisbogen bildet, der zur Achse dieser Platte zentriert ist.

9. Vorrichtung nach einem der vorhergehenden Ansprüche, **dadurch gekennzeichnet, dass** jede Platte drei Rampen aufweist.

10. Handbremse, **dadurch gekennzeichnet, dass** sie eine Steuervorrichtung nach einem der vorhergehenden Ansprüche aufweist.
